# EUROPEAN PATENT SPECIFICATION

(11) **EP 2 065 103 B1**
(45) Date of publication and mention of the grant of the patent: **06.06.2012**
(21) Application number: 07121672.5
(22) Date of filing: 27.11.2007
(51) Int. Cl.: B09C 1/08

(54) **Plant and process for in situ decontamination of soils and groundwater**
Anlage und Vefahren zur vor-Ort-Dekontaminierung von Böden und Grundwasser
Unité et procédé de décontamination in situ des sols et des eaux souterraines

(43) Date of publication of application: 03.06.2009
(73) Proprietor: SEA SpA, 38121 Trento (IT); Iteco S.r.l., 38015 Lavis (IT)
(72) Inventor: Maddalena, Roberto, 38100 Trento (IT); Simonini, Chiara, 38060 Nogaredo (IT)
(74) Representative: Gervasi, Gemma

(56) References cited:
- WO-A-01/68282
- US-A1- 2006 130 655

## Description

### Field of application of the invention

The present invention relates to the combined use of hydraulic fracturing and of chemical oxidation using ozone to treat soils contaminated by Aromatic Polycyclic Hydrocarbons (APHs) in the saturated zone.

The technology used is a combination between hydraulic fracturing, a very effective pre-treatment for the application of *in situ* treatments in soils with low hydraulic conductivity, and *in situ* chemical oxidation through the circulation of ozonated water.
Association of the two technologies is employed to treat soil, in particular in the saturated zone, but also produces a positive effect on the groundwater circulating therein; the groundwater is in fact utilised as means of transport of the oxidant and is consequently treated.

The experimentation illustrated below was conducted both on a muddy and subsequently on a sandy matrix, consequently evaluating its applicability and efficiency on both lithological horizons characterised by contamination typical of this area.

### State of the art

Hydraulic fracturing is a known technique, co-opted by the oil sector where it is frequently used to improve the permeability of the area in proximity to the hydrocarbon deposit; in fact, it was created to increase the productivity index of a well. It is now also increasingly used for environmental applications, as it is a technology that allows considerable improvements, of the conditions of permeability in a soil, ensuring a greater influence of the subsequent decontamination treatments (increasing the degradation speed of contaminants and thus decreasing decontamination costs).

In particular, as it has been ascertained that *in situ* treatments do not obtain good results in contaminated sites with low hydraulic conductivity, in these cases hydraulic fracturing is a fundamental pre-treatment. This technology prevalently consists in opening a system of horizontal fractures through the use of vertical wells, by injecting a fluid (normally water) at a higher pressure than the critical fracture pressure of the ground. The jet creates fracturing that extends to a distance as a function of the pressure applied and of the flow injected; the fluid fed into each hole expands through the fractures until it meets up with the fluid from adjacent bores. This creates a system of main horizontal fractures, of approximately 1-2 centimetres in width, connected by smaller vertical fractures a few millimetres in width; this system of openings obviously improves the total hydraulic conductivity of the soil.

Decontamination of contaminated soil through chemical oxidation is based on oxidative degradation of the contaminants present in the ground by substances with high redox potential. The oxidants mix with the contaminants and cause molecular breakdown and degradation to metabolites with low molecular weight; at the end of the process the pollutants are transformed from toxic compounds to innocuous compounds, such as water and carbon dioxide.

Oxidation can be used both *in situ* and *ex situ.* When the operation is performed *in situ*, reagents are dosed into the soil at different depths through injection wells. Each dosing point is effective in a certain area, the amplitude of which depends on the type of chemical agent dosed (stability in the ground, redox potential and reaction speed), on the concentration of the oxidant, on the characteristics of the soil (permeability, pH, temperature, concentration of the natural organic substance) and on the presence of the water table. Any reaction residues are removed by suction through extraction wells.

Compared to other types of decontamination operations, chemical oxidation has numerous advantages, including the possibility of treating the material *in situ*, avoiding transport and thus avoiding disturbances and impacts to areas adjacent to the operation, its low cost and its proven efficiency on numerous compounds. In fact, *in situ* chemical oxidation is a technology that guarantees high treatment efficiencies in removing toxic organic contaminants from groundwater.
The oxidants most commonly used are hydrogen peroxide (oxygenated water, normally used with the aid of catalysts in the form of Fenton's reagent or process), ozone, potassium permanganate and persulfate. They are able to cause complete chemical destruction of the majority of organic contaminants, even more so in a saturated environment: in the case of unsaturated aliphatic compounds and aromatic compounds, the efficiency is over 90%, with high reaction speeds (in the order of a few minutes); excellent results are also obtained in removing pollution from hydrocarbons, solvents and pesticides. It was decided to use ozone as its oxidation reaction proceeds with extremely fast kinetics, even faster than hydrogen peroxide; moreover, it is even more efficient in environments with an acid pH. Due to its high reactivity and instability, ozone must be produced on-site and requires relatively closely spaced distribution points (wells). *In situ* decomposition of the ozone, releasing molecular oxygen, can also lead to beneficial oxygenation and biostimulation.

US 2006130655 discloses a system for collecting gas from a subsurface body of contaminated water in accordance with the preamble of claim 1, wherein a site collects unabsorbed reactive gas from the subsurface body of contaminated water. A vacuum source is connected to the site and a controller regulates a flow of the reactive gas from the site to the vacuum source. WO 0168282 discloses an improved deep remediation injection system for in-situ remediation of contaminated soil and ground water. The system includes a soil penetrating lance for injecting at least two different highly-pressurized fluids into said contaminated soil as said soil penetrating lance is inserted for penetration therein. The soil penetrating lance has at least an upper set of injection ports, the upper set of injection ports being generally radially spaced-apart on said lance, and at least one lower set of injection ports, the lance, having an average width in the vicinity of the upper set of injection ports. The lance further includes substantially fluidically first and second conduits leading, respectively, to the lower set of injection ports and the upper set of injection ports.

### Summary of the invention

It is an object of the present invention to provide a plant and a process thereof for in situ decontamination of contaminated soils according to independent claims 1 and 6. The plant comprises an injection well, at least one extraction well, a water-ozone mixing section, a device to measure the concentration of the dissolved ozone connected to the ozone-water mixing section, a flow measuring device and a pressure measuring device connected on the same line as the device to measure dissolved ozone, and a mobile purification plant connected to the extraction well and to the ozone-water mixing section, comprising a device to measure the concentration of the residual ozone.
According to a preferred embodiment it is provided a by-pass line of the mains water on the ozone-water mixing section.
According to a further preferred embodiment it is provided that an ozone generator and the mains water are conveyed inside the ozone-water mixing section.

### Description of the invention

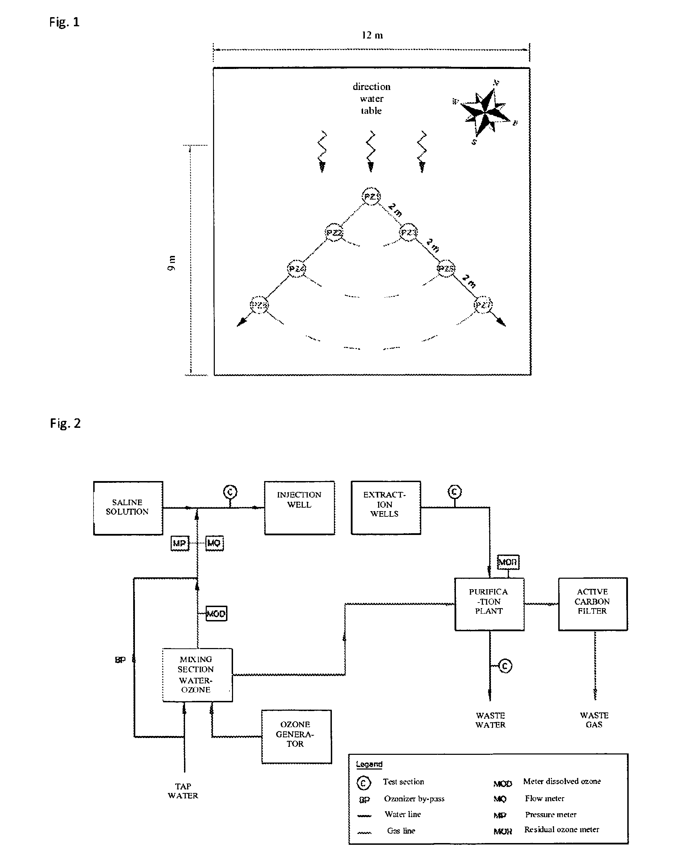

Implementation of the invention consisted in setting up two test fields, each constituted by seven piezometric wells, positioned along two directions perpendicular with each other, the median of which is oriented in the direction of the table, according to the diagram in Figure 1. It was decided to use two directions to obtain two comparison values and therefore purified of any conditions peculiar to the zone chosen. Readings were taken using the Geoprobe ® technique, unperturbed or with destruction to a depth of 9.6 metres from ground level; only the injection well in the second test field was pushed to a depth of 14.40 metres.

The first test field was used mainly to perform hydraulic fracturing tests; the second test field mainly to perform ozonation tests. It was decided to operate in this area to test the technology in the most unfavourable conditions possible. In fact, the area chosen is in absolute terms one of the most polluted within a former coal by-products area: it has a high degree of widespread contamination both in the muds and in the sands; moreover, between the lithological horizons of sand and mud at 13.65 metres below ground level a layer of DNAPLs was found, having a depth of 25 cm and with IPA concentration of almost 15,000 mg/kgₛₛ.

The plant produced, schematised in Figure 2, represents the best compromise found between efficiency, transportability and lack of structures suitable to house a fixed plant.
The ozonation tests consist in injecting into the soil a certain flow of pressurised water to which ozone is added; simultaneously the same flow is drawn from the extraction wells. More specifically, the mains water passes through an ozone and water mixing system, equipped with an instrument to continuously measure the concentration of dissolved ozone; the ozonated water is then pumped to the injection well, passing through a flow measuring device and a pressure measuring device.
The ozone used was produced from pure oxygen using an ozone generator having maximum capacity of 1400 g/h. However, in practical application an ozone production of 300 g/h was never exceeded.

The hydraulic fracturing tests performed were fundamentally of two types:
- injection of pressurised mains water into the soil: the objective is to manage to record the classic increase in resistance by the soil until sudden drop, corresponding to fracture thereof upon reaching the critical pressure;
- injection of saline solution into the soil: a specific quantity of a solution composed of water and sodium chloride, saturated at the conditions of use, is injected as tracer in order to follow propagation and distribution thereof, monitoring and recording the variations in electrical conductivity in the soil itself; after this phase, soil "washing" can optionally be performed by pumping mains water in order to follow the forced or natural reduction of this conductivity.

Propagation of the saline tracer inside the layers of the soil was measured by recording the increase in electrical conductivity in the piezometers and was validated by the geoelectric monitoring conducted during tests in collaboration with the University of Milan - Bicocca and the Polytechnic of Turin, which confirmed the decrease in the electrical resistance of the soil, during and after injection of the saline solution, in the area surrounding the injection zone.
During performance of these tests in the injection section, saline solution is drawn directly from a storage tank during injection or the by-pass line of the main flow line is used, pumping mains water as is.
During performance of all the tests, the water pumped from the extraction wells is conveyed to a mobile purification plant where it is filtered on quartzite filters and then by passing through active carbon filters. The effluent from the plant, appropriately and adequately decontaminated, is then discharged.

During the ozonation tests, the gaseous ozone not solubilised in the mixing section is used to purify the water extracted from the soil, always characterised by high concentrations of contaminants; in this manner, all the ozone produced is used, reducing the total running costs. The treatment is therefore the combination of an *in situ* action and an on-site action, removing, through oxidation, part of the pollution directly in the soil and part in the purification section.

Samples of water were taken at the inlet and outlet of the active carbon treatment system during and after each hydraulic fracturing and ozonation test, in order to identify any abnormal situations, such as the presence of contaminants or of possible by-products.
All fundamental test data were memorised by a multichannel recorder with graphic display, analogically connected to the various measurement instruments used.

### Test in the muddy layer, operating conditions and results

### - Hydraulic fracturing test

Various hydraulic fracturing tests of both types were performed in the lithological layer of the muds in a range of depths between 3.0 and 5.0 metres below ground level.

### Injection of pressurised mains water

Three tests were performed injecting simple pressurised mains water into the first test field, conducted with progressive increase in the flow.
During these tests, neither a clear increase in the resistance by the soil nor a sudden drop thereof was noted; instead, a progressive and relatively small decrease in resistance during injection was noticed, sign of a growing increase in water diffusion in the soil.

### Injection of saline solution

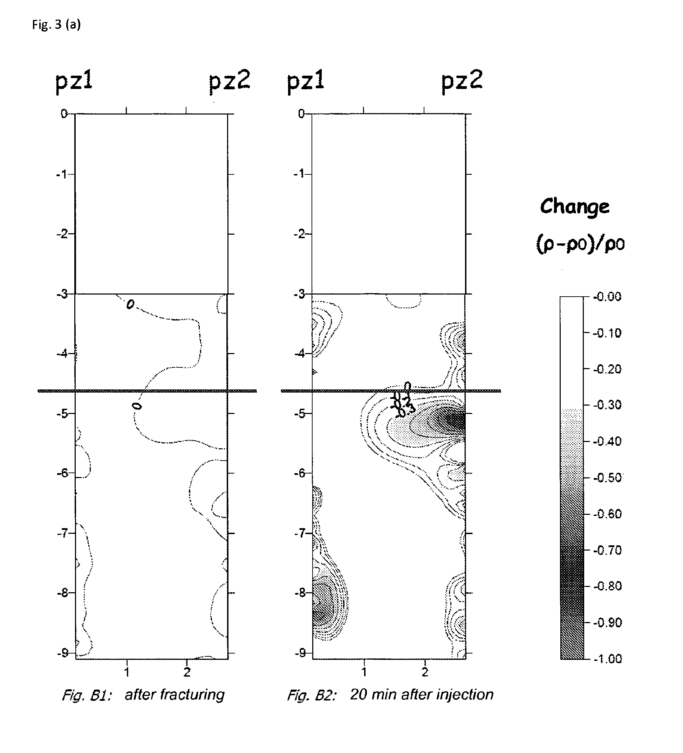

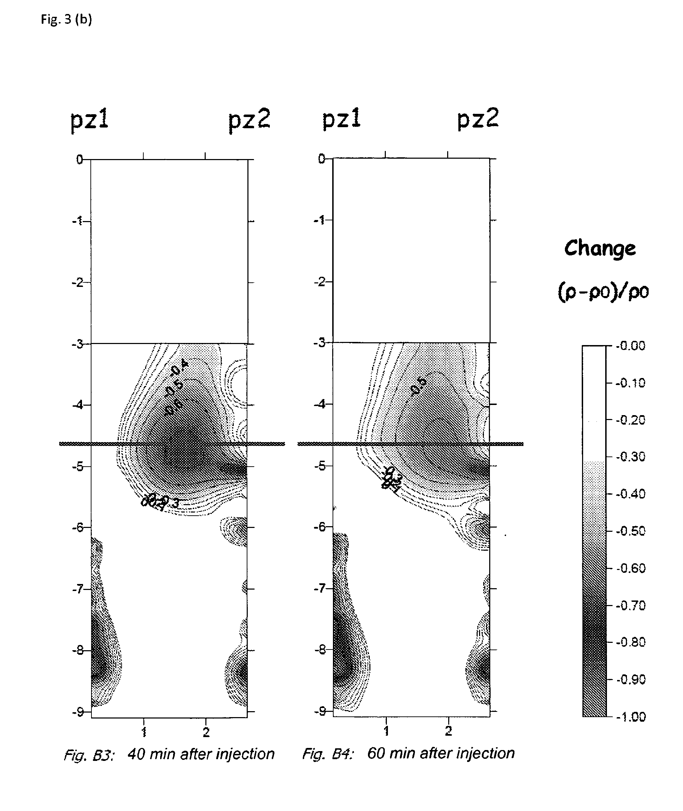

Three saline injection tests were also performed, again in the first test field.
During the tests, approximately 1000 litres of saline solution, having electrical conductivity of 150 mS, were injected into the piezometer PZ1. Subsequently, a wash phase was performed with the same flow for the duration of approximately 2-3 hours, which pushed the saline solution towards the piezometers for monitoring the conductivity values and the piezometric level of the table (the remaining six wells). Geoelectrical monitoring of propagation of the saline tracer was performed on the section between PZ2 and PZ3, both at a distance of 2 metres from the injection point.
The saline solution reached all the monitoring piezometers in a time ranging from 3 minutes to 2.5 hours from the start of injection, depending on the distance of the control well (maximum distance 6 metres). The conductivity values of the soil increased from 1.5 times in the farthest away monitoring piezometers, to 22 times in the nearest monitoring piezometers (2 metres).
Geoelectrical monitoring of propagation of the saline tracer confirmed these rapid permeation values (Figure 3).

### - In situ chemical oxidation tests

Two *in situ* chemical oxidation tests were performed in the lithological layer of the muds using ozone, the first inside the first test field, the second inside the second test field.

### 1st in situ ozonation test

Injection of ozonated water took place at a depth of 3.30 metres from ground level for a total duration of approximately 330 hours, using a flow varying from 1.0 and 5.0 m³/h and a concentration of dissolved ozone between 6 and 12 ppm.
Samples were taken with the Geoprobe® technique: 2 samples were taken at the injection depth along the direction of the groundwater, one at 0.75 metres and the other at 1.50 metres downstream of the injection well. The samples proved to be very complicated to take, as the soil in the injection zone was very fluid and consequently it was difficult to take samples using liners.
Reduction of contamination in the soil around the injection well was calculated quantitatively by comparing point values of contamination before and after the combined treatment. Compared with initial contamination (relative to the piezometer PZ1) reductions of the IPA concentration in the soil of 81% at 0.75 metres from the injection well and of 50% at 1.5 metres were recorded.
The removal percentages provided here are the resultant of a dual effect produced by the combined *in situ* hydraulic fracturing and ozonation treatment: in fact, as well as the actual chemical degradation by the ozone, there is an appreciable effect of movement of the pollutants in the muds fluidified following injection, which is positive as it allows recovery of pollution by providing a system to capture and treat the injection water, by means of extraction wells located downstream.

### 2nd in situ ozonation test

Injection of ozonated water took place at a depth of 3.5 metres from ground level, for a total duration of approximately 49 days practically continuously, using a flow varying between 1.0 and 5.0 m³/h and a concentration of dissolved ozone between 7 and 11 ppm.

Samples were taken with the Macro Core system by Geoprobe^{®}. Three liner samples were taken at the injection zone, the execution characteristics of which are described in the following table:

| **Sample** | **Distance from the injection point [m]** | **Direction in relation to injection** | **Sample interval [m]** |
|---|---|---|---|
| S1 | 1.00 | Downstream | -3.00/-4.20 |
| S2-1 | 1.00 | Upstream | -2.00/-3.20 |
| S2-2 | 1.00 | Upstream | -3.20/-4.40 |

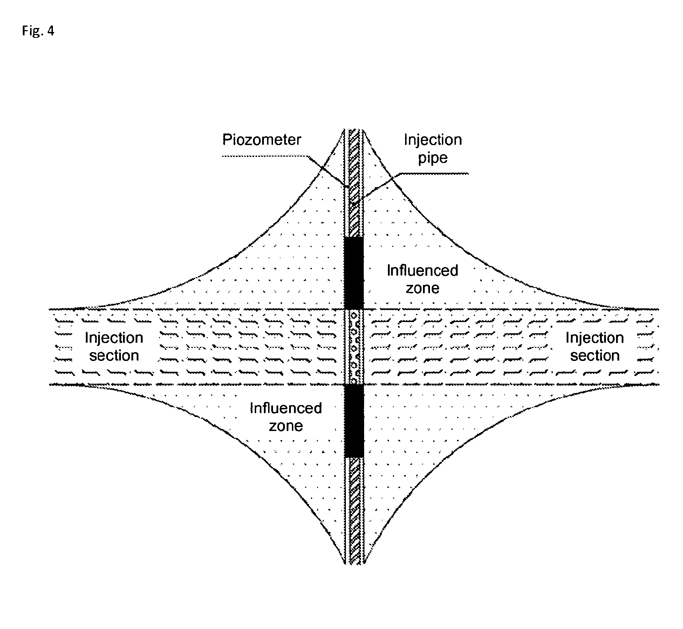

Analysis of the electrical tomography and of the samples immediately showed that in actual fact the zone influenced by injection, and consequently reached by the treatment, is much wider than the zone corresponding to the actual injection section. As can be seen in Figure 4, the area involved is a sort of funnel that closes around the injection depth as it moves radically away from the injection tube.

The removal efficiencies were determined by quantitative comparison between the levels of pollution on the vertical of the samples before and after the combined treatment. Compared to initial contamination, a reduction in the IPA concentration in the soil of 40% along S 1 was recorded.
A mass balance of the pollutants was also effected: the concentration of residual pollution in the various points of the soil influenced by the treatment was estimated by interpolating the definite values obtained by analysing the samples; the volumes involved and the mass of pollutant distributed therein were then calculated. This mass of pollutant was compared with the initial mass, calculated on the basis of the initial concentration in the injection point O1 After ozone treatment, a reduction in IPA mass of 63% was detected in the volume of soil between O1 and S1, and of 42% between O1 and S2.
It can be noted how removal is much greater in the area downstream of the injection well; this effect is undoubtedly due to the action exerted by the extraction wells, which tend to draw the injected water towards themselves. During performance of this test the muds were not fluidified as in the previous test, but maintained their consistency. Observing distribution of the pollutant in the cores analysed, it can however be noted that, as well as the actual chemical degradation by the ozone, there is an effect of movement of the pollution in the muds following injection. It is therefore advisable to provide a system to capture and treat the injection water, by means of extraction wells located downstream.

A very important aspect to be considered is the formation of possible by-products of the IPAs caused by partial oxidation with ozone. This risk, which was never noted even in laboratory tests on groundwaters, can be considered inexistent, as the results of chemical analysis have shown that the soil as is already has a high initial level of partial oxidation and that the treatment performed merely decreased the quantity of by-product present with respect to the total amount of contamination. Therefore, this means that any partly degraded compounds, whether naturally or artificially, are more easily attacked by the oxidative action of the ozone.

### Test in the sandy layer, operating conditions and results

### - Hydraulic fracturing test

Various hydraulic fracturing tests of both types were performed in the lithological layer of the sands in a range of depths between 7.5 and 8.5 metres below ground level.

### Injection of pressurised mains water

Two tests were performed injecting simple pressurised mains water, one in the first test field and the other in the second, conducted with progressive increase in the flow. During these tests, neither a clear increase in the resistance by the soil nor a sudden drop thereof was noted; instead, a progressive and relatively small decrease in resistance during injection was noticed, sign of a growing increase in water diffusion in the soil.

### Injection of saline solution

Three saline injection tests were also performed within the second test field. During the tests approximately 1000 litres of saline solution, having electrical conductivity of 150 mS, were injected in the piezometers 02 or 05. After this, the system was left unaltered and movement of the salt without injection was monitored for approximately 1.5- 3 hours. Subsequently, a wash step was performed with the same flow for the duration of a further 2 hours, which pushed the saline solution towards the piezometers for monitoring the conductivity values and the piezometric level of the table (the remaining six wells). Geoelectrical monitoring of propagation of the saline tracer was conducted in the first test on the section between 06 and 09 (6 and 4 metres from the injection point), in the second on the section between 03 and 04 (2.8 and 2 metres from the injection point), in the third on the section between 03 and 07 (both at 2 metres from the injection point). The saline solution reached all monitoring piezometers in a time ranging from 20 minutes to 5.5 hours from the start of injection, depending on the distance of the control well (maximum distance 6.3 metres). The conductivity values of the soil increased from 2.5 times in the farthest away monitoring piezometers, to 20 times in the nearest monitoring piezometers (2-3 metres).
Geoelectrical monitoring of propagation of the saline tracer did not give satisfactory results in the first test as the section considered is too far from the injection point; in the last two tests it instead confirmed these rapid permeation values.

### - In situ chemical oxidation tests

Only one *in situ* chemical oxidation test was performed in the lithological layer of the sands using ozone. Injection of ozonated water took place at a depth of 13.20 metres from ground level at DNAPLs, for a total duration of approximately 200 hours, using a flow varying between 1.0 and 5.0 m³/h and a concentration of dissolved ozone between 7 and 13 ppm. Samples were taken with the Macro Core system by Geoprobe®: the samples analysed and used to calculate the reduction in contamination in the sands, following *in situ* ozonation treatment, are in the order of execution PC1, PC2 and PC4; their execution characteristics are described in the following table:

| **Sample** | **Distance from the injection point [m]** | **Sample interval [m]** |
|---|---|---|
| PC1 | 1.55 | -13.00/-14.00 |
| PC2 | 1.50 | -13.20/-14.40 |
| PC3 | 0.75 | -13.20/-14.20 |
| PC4 | 0.65 | -13.30/-14.50 |

Also in this case, analysis of the electrical tomography and of the samples showed that the zone influenced by injection, and consequently reached by the treatment, is much wider than the zone corresponding to the actual injection section, as illustrated previously in Figure 4.

The removal efficiencies were determined by quantitative comparison between the levels of pollution on the vertical of the samples before and after the combined treatment. Compared to initial contamination, reductions in the IPA concentration in the soil of 63% along PC4, of 93% along PC1 and of 68% along PC2 were recorded. A mass balance of the pollutants was also effected: the concentration of residual pollution in the various points of the soil influenced by the treatment was estimated by interpolating the definite values obtained by analysing the samples; the volumes involved and the mass of pollutant distributed therein were then calculated. This mass of pollutant was compared with the initial mass, calculated on the basis of the initial concentration in the injection point O1. After ozone treatment, a reduction in IPA mass of 77% was detected in the volume of soil between O1 and PC4, of 86% between PC4 and PC1, and of 85% between PC4 and PC2.

It can be noted how the removal percentage is lower in the volume of soil nearer to the injection zone: this effect can occur due to the "funnel" shape of the zone influenced by the combined treatment. In the proximity of the injection well, the positive effects of the treatment are distributed over a much wider volume than at a certain distance therefrom. In actual fact, by observing the distribution of pollution in the cores analysed, it can nonetheless be noted that, as well as the actual chemical degradation by the ozone, there is a significant effect of movement of the pollution in the sands following injection. A system to capture and treat the injection water, by means of extraction wells located downstream, was therefore adopted.

A very important aspect to be considered is the formation of possible by-products of the IPAs caused by partial oxidation with ozone. This risk, which was never noted even in laboratory tests on groundwaters, can be considered inexistent, as the results of chemical analysis have shown that the soil as is already has a high initial level of partial oxidation and that the treatment performed merely decreased the quantity of by-product present with respect to the total amount of contamination. Therefore, this means that any partly degraded compounds, whether naturally or artificially, are more easily attacked by the oxidative action of the ozone.

On the basis of the performances obtained in this cycle of tests, chemical oxidation performed with ozone was shown to be an excellent technology for the removal of IPAs from both contaminated sandy and muddy matrices in the water table. Appreciable reductions were obtained in a radius of a few metres from the injection point both through the direct effect of oxidation and through the indirect effect of soil washing; a high factor of movement of the pollution due to injection and extraction was in fact noted, ensuring that a considerable and even preponderant part of pollution present in the soil is drawn off and treated externally, thus making a technology of this type a combination of *in situ* and on-site treatment. This consideration makes it possible to state that there is a significant decrease in the times required for complete decontamination.

In the muds in particular, reductions in the IPA content varying from 42% to 63% (mass balance method) were obtained at a distance of one metre from the injection point, as a function of the direction of sampling in relation to the direction of the table; reductions in the IPA content varying from 77% to 86% (mass balance method) were obtained as a function of the distance from the injection point (0.65m - 1.55m) in the sands. The minimum radius of influence found in the muds at a depth of between 3.30 metres and 4.70 metres from ground level is 6 metres; this distance was reached after two hours of continuous injection (of saline solution or mains water). The nearest piezometers (2 metres) were reached after a few minutes.

The minimum radius of influence found instead in the sands at a depth of 7.80 metres is 6.3 metres; the nearest piezometers (from 2 to 4.5 metres) were reached after just 15-25 minutes. No formation of possible by-products of IPAs caused by partial oxidation with ozone was detected. The use of ozone as oxidant allows installation of a purification plant of the extracted water of small dimensions, due to the extremely short contact time required for the ozone to act, with relatively low costs, as it requires only a few additional components in relation to the injection and mixing section. Another advantage derives from the possibility of recycling the treatment water, which would allow decontamination of the area in question without the risk of transferring pollution from one environmental component to the other and with a considerable saving in terms of mains water used.
According to a preferred aspect of the invention, as well as the oxidising action of the ozone, it is possible to make use of the high oxidation potential and the excellent reactivity of the hydroxyl free radicals produced, during spontaneous decomposition of the ozone. These advanced oxidation processes can be used in the same fields of competence as ozonation (potabilisation, decontamination of waters and soils,...); however, they have the advantage of treating pollutants with a wider sphere of action, as they are capable of developing a greater oxidation potential.
By accelerating the decomposition speed of the ozone, the concentration of hydroxyl radicals increases, a factor that increases the oxidation speed. There are many methods of stimulating ozone decomposition; the one that best combines with the technology proposed here of *in situ* ozonation is the addition of hydrogen peroxide to the ozonated water (peroxone).
In processes conducted with peroxone, chemical oxidation of the pollutants present in the soil and in the groundwaters occurs following two parallel paths:
- by direct oxidation by the ozone dissolved in water;
- by oxidation by hydroxyl radicals produced by ozone decomposition.

The direct oxidation speed of molecular ozone is relatively slow if compared to that of hydroxyl radicals, but the concentration of ozone is relatively high, while that of hydroxyl radicals in conditions of normal ozonation is limited.
The chemical oxidation process conducted with ozone is essentially based on direct oxidation through the action of ozone dissolved in water; the oxidation process conducted with peroxone is instead based mainly on oxidation by hydroxyl radicals, while the residual ozone is very limited as hydrogen peroxide greatly accelerates its decomposition. However, the increase in oxidation attained by the use of hydroxyl radicals abundantly compensates for the reduction in direct oxidation through ozone. The result is that the process with peroxone is much more rapid and reactive; it therefore allows treatment of those contaminants that are difficult to oxidise, such as chlorinated solvents and halogenated compounds in general. This technology can thus be fully applied to situations of pollution caused by the presence of hydrocarbons (especially aromatic polycyclic hydrocarbons); it can also be applied, although with some preventive controls, to halogenated compounds (such as chlorinated solvents) and metals that can be oxidised by ozone (such as iron and manganese).

## Claims

1. A plant for in situ decontamination of contaminated soils, comprising the following parts:
- an injection well;
- at least one extraction well;
- a flow measuring device and a pressure measuring device;
- a mobile purification plant connected to the extraction well;
**characterized in that** the plant further comprises
- a water-ozone mixing section;
- a device to measure the concentration of the dissolved ozone connected to the ozone-water mixing section;
and wherein the flow measuring device and the pressure measuring device are connected on the same line as the device to measure dissolved ozone; and the - mobile purification plant connected to the extraction well is connected to the ozone-water mixing section, and comprises a device to measure the concentration of the residual ozone.

2. The plant as claimed in Claim 1,
comprising a by-pass line of the mains water on the ozone-water mixing section.

3. The plant as claimed in one of the previous claims,
comprising a section for injecting saline solution into the injection well

4. The plant as claimed in one of the previous claims,
comprising quartzite and active carbon filters downstream of the purification plant.

5. The plant as claimed in one of the previous claims,
where an ozone generator and the mains water are conveyed inside the ozone-water mixing section.

6. A process for *in situ* decontamination of contaminated soils, making use of a plant as claimed in claims 1 to 5, comprising the following steps:
a - obtaining pressurised water to which ozone is added in the ozone-water mixing section;
b - pumping the ozonated water into the injection well after passing through a flow measuring -device and a pressure measuring device, consequently obtaining hydraulic fracturing of the soil;
c - drawing the same quantity of water injected in step (b) from the extraction well;
*d - in situ* ozonation of the soil;
e - conveying of the water pumped from the extraction wells to the mobile purification plant, where it is filtered on quartzite filters and subsequently by passing through active carbon filters;
f - use of the gaseous ozone not solubilised in the mixing section for purification of the water extracted from the soil.

7. The process as claimed in Claim 6,
where the maximum capacity of the ozone generator is 1400 g/h.

8. The process as claimed in one of Claims 6 or 7,
where the hydraulic fracturing step (b) is implemented by feeding into the injection well a saturated saline solution composed of water and sodium chloride, as tracer to identify the fracturing conditions of the soil to be treated, monitoring and recording the variations in electrical conductivity in said soil.

9. The process as claimed in one of Claims 6 to 8,
where hydraulic fracturing takes place by injecting a quantity of saline solution between 500 and 1500 litres for a maximum time of 3 hours.

10. The process as claimed in one of Claims 6 to 9,
where *in situ* ozonation of the soil takes place by injecting ozonated water for a time between 100 hours and 50 days.

11. The process as claimed in Claim 10,
where the flow of ozonated water varies between 1.0 and 5.0 m³/h and has a concentration of dissolved ozone between 6 and 13ppm.

12. The process as claimed in one of claims 6 to 11,
where hydrogen peroxide is added to the ozonated water to obtain hydroxyl free radicals which optimise chemical oxidation of the pollutants present in the soil.

## Patentansprüche

1. Werk für die in-situ-Dekontaminierung schadstoffbelasteter Böden, wobei das Werk die folgenden Teile umfasst:
- eine Injektionswand;
- wenigstens eine Extraktionswand;
- eine Durchflussmessvorrichtung und eine Druckmessvorrichtung;
- ein mobiles Reinigungswerk, das mit der Extraktionswand verbunden ist;
**dadurch gekennzeichnet, dass** das Werk ferner umfasst:
- einen Wasser-Ozon-Mischabschnitt;
- eine Vorrichtung zum Messen der Konzentration des gelösten Ozons, die mit dem Ozon-Wasser-Mischabschnitt verbunden ist;
und wobei die Durchflussmessvorrichtung und die Druckmessvorrichtung an derselben Leitung wie die Vorrichtung zum Messen des gelösten Ozons angeschlossen sind; und wobei
- das mit der Extraktionswand verbundene mobile Reinigungswerk mit dem Ozon-Wasser-Mischabschnitt verbunden ist und eine Vorrichtung zum Messen der Konzentration des Restozons umfasst.

2. Werk gemäß Anspruch 1,
das eine Umgehungsleitung des Leitungswassers an dem Ozon-Wasser-Mischabschnitt umfasst.

3. Werk gemäß einem der vorhergehenden Ansprüche,
das einen Abschnitt zur Injektion von Salzlösung in die Injektionswand umfasst.

4. Werk gemäß einem der vorhergehenden Ansprüche,
das auf der Auslassseite des Reinigungswerks einen Quarzit- und einen Aktivkohlefilter umfasst.

5. Werk gemäß einem der vorhergehenden Ansprüche,
wobei innerhalb des Ozon-Wasser-Mischabschnitts ein Ozonergenerator und das Leitungswasser transportiert werden.

6. Verfahren für die in-situ-Dekontaminierung schadstoffbelasteter Böden unter Verwendung eines Werks gemäß Anspruch 1 bis 5, wobei das Verfahren die folgenden Schritte umfasst:
a - Erhalten von Druckwasser, zu dem Ozon zugegeben ist, in dem Ozon-Wasser-Mischabschnitt;
b - Pumpen des mit Ozon angereicherten Wassers in die Injektionswand nach Durchgang durch eine Durchflussmessvorrichtung und durch eine Druckmessvorrichtung, folglich Erhalten einer hydraulischen Rissbildung des Bodens;
c - Absaugen derselben Menge Wasser, die in Schritt (b) injiziert worden ist, aus der Extraktionswand;
d - in-situ-Anreicherung des Bodens mit Ozon;
e - Transportieren des von den Extraktionswänden gepumpten Wassers zu dem mobilen Reinigungswerk, wo es an Quarzitfiltern gefiltert und nachfolgend durch Aktivkohlefilter geleitet wird;
f - Verwenden des gasförmigen Ozons, das nicht in dem Mischabschnitt löslich gemacht worden ist, zur Reinigung des aus dem Boden extrahierten Wassers.

7. Verfahren gemäß Anspruch 6,
bei dem die maximale Kapazität des Ozongenerators 1400 g/h beträgt.

8. Verfahren gemäß einem der Ansprüche 6 oder 7,
bei dem der Schritt (b) der hydraulischen Rissbildung durch Zuführen einer aus Wasser und Natriumchlorid bestehenden gesättigten Salzlösung in die Injektionswand als Indikator zum Identifizieren der Rissbildungsbedingungen des zu behandelnden Bodens, zum Überwachen und Aufzeichnen der Änderungen der elektrischen Leitfähigkeit in dem genannten Boden implementiert wird.

9. Verfahren gemäß einem der Ansprüche 6 bis 8,
bei dem die hydraulische Rissbildung durch Injizieren einer Menge Salzlösung von zwischen 500 und 1500 Litern für eine maximale Zeitdauer von 3 Stunden stattfindet.

10. Verfahren gemäß einem der Ansprüche 6 bis 9,
wobei die in-situ-Anreicherung des Bodens mit Ozon durch Injizieren von mit Ozon angereichertem Wasser für eine Zeitdauer von zwischen 100 Stunden und 50 Tagen stattfindet.

11. Verfahren gemäß Anspruch 10,
bei dem der Durchfluss des mit Ozon angereicherten Wassers zwischen 1,0 und 5,0 m³/h variiert und es eine Konzentration von gelöstem Ozon zwischen 6 und 13 ppm aufweist.

12. Verfahren gemäß einem der Ansprüche 6 bis 11,
bei dem zu dem mit Ozon angereicherten Wasser Wasserstoffperoxid zugegeben wird, um freie Hydroxylradikale zu erhalten, die die chemische Oxidation der in dem Boden vorhandenen Schadstoffe optimieren.

## Revendications

1. Unité destinée à la décontamination sur site des sols contaminés, comprenant les parties suivantes :
- un puits d'injection ;
- au moins un puits d'extraction ;
- un dispositif de mesure de flux et un dispositif de mesure de pression ;
- une unité de purification mobile raccordée au puits d'extraction ; **caractérisée en ce que** l'unité comprend en outre
- une section de mélange eau-ozone ;
- un dispositif pour mesurer la concentration de l'ozone dissous raccordé à la section de mélange ozone-eau ;
et dans laquelle le dispositif de mesure de flux et le dispositif de mesure de pression sont raccordés sur la même ligne que le dispositif pour mesurer l'ozone dissous ; et l'unité de purification mobile raccordée au puits d'extraction est connectée à la section de mélange eau-ozone, et comprend un dispositif permettant de mesurer la concentration de l'ozone résiduel.

2. Unité selon la revendication 1,
comprenant un conduit de dérivation de l'eau de ville sur la section de mélange ozone-eau.

3. Unité selon l'une quelconque des revendications précédentes,
comprenant une section pour injecter une solution saline dans le puits d'injection.

4. Unité selon l'une des revendications précédentes,
comprenant des filtres en quartzite et en charbon actif en aval de l'unité de purification.

5. Unité selon l'une quelconque des revendications précédentes,
dans laquelle un générateur d'ozone et l'eau de ville sont convoyés à l'intérieur de la section de mélange ozone-eau.

6. Procédé de décontamination sur site de sols contaminés, utilisant une unité selon les revendications 1 à 5, comprenant les étapes suivantes :
a-obtention d'eau pressurisée à laquelle de l'ozone est ajouté dans la section de mélange eau-ozone ;
b - pompage de l'eau ozonée dans le puits d'injection après passage à travers un dispositif de mesure de flux et un dispositif de mesure de pression, en obtenant par conséquent une fracturation hydraulique du sol ;
c - prélèvement de la même quantité d'eau injectée dans l'étape (b) depuis le puits d' extraction ;
d - ozonation sur site du sol;
e - transport de l'eau pompée des puits d'extraction à l'unité de purification mobile, où elle est filtrée sur des filtres en quartzite et ensuite en passant à travers des filtres à charbon actif ;
f - utilisation de l'ozone gazeux non solubilisé dans la section de mélange afin de purifier l'eau extraite du sol.

7. Procédé selon la revendication 6,
dans lequel la capacité maximale du générateur d'ozone est de 1400 g/h.

8. Procédé selon l'une quelconque des revendications 6 ou 7,
dans lequel l'étape de fracturation hydraulique (b) est réalisée en introduisant dans le puits d'injection une solution saline saturée, composée d'eau et de chlorure de sodium, comme traceur pour identifier les conditions de fracturation du sol à traiter, en contrôlant et en enregistrant les variations de conductivité électrique dudit sol.

9. Procédé selon l'une quelconque des revendications 6 à 8,
dans lequel la fracturation hydraulique a lieu en injectant une quantité de solution saline, comprise entre 500 et 1500 litres, pendant une durée maximum de 3 heures.

10. Procédé selon l'une quelconque des revendications 6 à 9, dans lequel l'ozonation sur site du sol a lieu en injectant de l'eau ozonée pendant une durée comprise entre 100 heures et 50 jours.

11. Procédé selon la revendication 10, dans lequel le flux d'eau ozonée varie entre 1,0 et 5,0 m³/h et a une concentration d'ozone dissous entre 6 et 13 ppm.

12. Procédé selon l'une quelconque des revendications 6 à 11, dans lequel du peroxyde d'hydrogène est ajouté à l'eau ozonée pour obtenir des radicaux sans hydroxyle qui optimisent l'oxydation chimique des polluants présents dans le sol.
